# EUROPÄISCHE PATENTSCHRIFT

(11) **EP 2 876 422 B1**
(45) Veröffentlichungstag und Bekanntmachung des Hinweises auf die Patenterteilung: **17.05.2017**
(21) Anmeldenummer: 14193011.5
(22) Anmeldetag: 13.11.2014
(51) Int. Cl.: G01M 11/00

(54) **Pruefvorrichtung fuer elektro-optische Leiterplatten**
Test apparatus for electro-optical printed circuit boards
Dispositif de vérification pour plaquettes électro-optiques

(30) Priorität: 22.11.2013 CH 19492013
(43) Veröffentlichungstag der Anmeldung: 27.05.2015
(73) Patentinhaber: vario-optics ag, 9410 Heiden (CH)
(72) Erfinder: Michler, Markus, 6800 Feldkirch (AT); Betschon, Felix, 9011 St. Gallen (CH); Halter, Markus, 9444 Diepoldsau (CH); Lamprecht, Tobias, 9442 Berneck (CH); Kremmel, Johannes, 6800 Feldkirch (AT); Bischof, David, 6832 Sulz (AT); Beyer, Stefan, 9413 Oberegg (CH)
(74) Vertreter: Falk, Urs

(56) Entgegenhaltungen:
- GB-A- 2 082 012
- GB-A- 2 128 839
- HEARD S. LOWRY ET AL: "<title>Use of AEDC's laser-based direct-write scene generator to drive NAWC's fiber array projector</title>", PROCEEDINGS OF SPIE, Bd. 3699, 14. Juli 1999 (1999-07-14), Seiten 240-248, XP055184280, ISSN: 0277-786X, DOI: 10.1117/12.352952
- IMMONEN M ET AL: "Fabrication and Characterization of Polymer Optical Waveguides With Integrated Micromirrors for Three-Dimensional Board-Level Optical Interconnects", IEEE TRANSACTIONS ON ELECTRONICS PACKAGING MANUFACTURING, IEEE, PISCATAWAY, NY, US, Bd. 28, Nr. 4, 1. Oktober 2005 (2005-10-01), Seiten 304-311, XP011141383, ISSN: 1521-334X, DOI: 10.1109/TEPM.2005.856538

## Beschreibung

### Technisches Gebiet

Die Erfindung betrifft eine Prüfvorrichtung für elektro-optische Leiterplatten. Solche Leiterplatten enthalten eine Vielzahl von Lichtwellenleitern, die auch als optische Kanäle bezeichnet werden, und elektrische Verbindungsleitungen.

### Hintergrund der Erfindung

Die Prüfung der Lichtwellenleitern wird meist mittels einer Lichtquelle (Laser, LED, Glasfaser, etc.) und einem optischen Empfänger (Photodiode mit oder ohne Optik) realisiert. Die optischen Verluste und damit die Qualität der Lichtwellenleiter können so sehr präzise gemessen werden. Allerdings müssen die Lichtquelle und der Empfänger sehr präzise zum Lichtwellenleiter ausgerichtet werden. Ein solches Prüfverfahren ist beispielsweise im Artikel "Fabrication and Characterization of Polymer Optical Waveguides With Integrated Micromirrors for Three-Dimensional Board-Level Optical Interconnects" von Marika Immonen et al. beschrieben, der in IEEE TRANSACTIONS ON ELECTRONICS PACKAGING MANUFACTURING, VOL. 28, NO. 4, OCTOBER 2005 publiziert wurde. Bei einer hohen Anzahl Lichtwellenleiter ist das sehr zeitaufwändig und deshalb nicht praktikabel, da die Lichtquelle und der Empfänger für jeden Lichtwellenleiter einzeln ausgerichtet werden müssen. Bekannt ist auch eine Prüfvorrichtung, die eine Lichtquelle, die eine relativ grosse Fläche der Leiterplatte beleuchtet, eine Kamera und eine Steuereinrichtung aufweist.

Ein Prüfverfahren für Lichtleitfaserbündel ist in GB 2 128 839 A beschrieben. Es werden nacheinander zwei zueinander orthogonale Lichtbalken auf die Eintrittsflächen des Bündels projiziert und quer zu ihrer Ausrichtung über die Eintrittsflächen bewegt. Eine Kamera nimmt Bilder der Austrittsflächen des Bündels auf. Diese Bilder werden ausgewertet und es wird eine Zuordnung zwischen den Eintrittsflächen und den Austrittsflächen der einzelnen Lichtleitfasern des Bündels bestimmt.

### Kurze Beschreibung der Erfindung

Der Erfindung liegt die Aufgabe zugrunde, eine Prüfvorrichtung für elektro-optische Leiterplatten zu entwickeln, die auch bei einer Vielzahl von Lichtwellenleitern pro Leiterplatte schnell arbeitet.

Die genannte Aufgabe wird erfindungsgemäss gelöst durch die Merkmale des Anspruchs 1.

Gemäss der Erfindung umfasst eine Prüfvorrichtung für elektro-optische Leiterplatten mit Lichtwellenleitern: eine Halterung für die Aufnahme einer elektro-optischen Leiterplatte, einen Beamer, eine Kamera, und eine Steuereinrichtung, wobei
der Beamer und die Kamera so positionierbar sind, dass vom Beamer abgegebenes Licht mittels mindestens eines Umlenkelementes in einen oder mehrere Lichtwellenleiter der elektro-optischen Leiterplatte einkoppelbar und mittels mindestens eines weiteren Umlenkelementes in das Blickfeld der Kamera auskoppelbar ist, wobei jedes der Umlenkelemente mehrere Umlenkspiegel enthält und wobei jedem Lichtwellenleiter der Leiterplatte ein Umlenkspiegel eines ersten Umlenkelementes und ein Umlenkspiegel eines zweiten Umlenkelementes zugeordnet ist, und wobei die Steuereinrichtung eingerichtet ist, in einer ersten Phase
- einen ersten mit dem Beamer projizierten Lichtbalken schrittweise entlang einer ersten Richtung über das erste Umlenkelement zu bewegen und mit der Kamera bei jedem Schritt ein Bild aufzunehmen, wobei sich der erste Lichtbalken orthogonal zur ersten Richtung erstreckt;
- von den von der Kamera gelieferten Bildern als ersten Satz von Bildern diejenigen Bilder auszusuchen, bei denen wenigstens ein Umlenkspiegel des zweiten Umlenkelementes aufleuchtet;
- einen zweiten mit dem Beamer projizierten Lichtbalken schrittweise entlang einer zweiten Richtung über das erste Umlenkelement zu bewegen und mit der Kamera bei jedem Schritt ein Bild aufzunehmen, wobei sich der zweite Lichtbalken orthogonal zur zweiten Richtung erstreckt;
- von den von der Kamera gelieferten Bildern als zweiten Satz von Bildern diejenigen Bilder auszusuchen, bei denen wenigstens ein Umlenkspiegel des zweiten Umlenkelementes aufleuchtet; und
- aus dem ersten Satz und dem zweiten Satz von Bildern für jeden zu testenden Lichtwellenleiter diejenige Position zu ermitteln, die ein Lichtfleck in dem von dem Beamer erzeugten Bild einnehmen muss, damit der Lichtfleck ausschliesslich den Umlenkspiegel des ersten Umlenkelementes beleuchtet, der dem zu testenden Lichtwellenleiter zugeordnet ist;
und wobei die Steuereinrichtung eingerichtet ist, in einer zweiten Phase für jeden zu testenden Lichtwellenleiter
mit dem Beamer anhand der in der ersten Phase ermittelten Position einen Lichtfleck auf den dem zu testenden Lichtwellenleiter zugeordneten Umlenkspiegel zu projizieren, wobei der Lichtfleck keinen Umlenkspiegel beleuchtet, der einem dem zu testenden Lichtwellenleiter benachbarten Lichtwellenleiter zugeordnet ist,
mit der Kamera ein Bild aufzunehmen, und
anhand des Bildes eine Qualität des Lichtwellenleiters zu bestimmen.

Die Steuereinrichtung und der Beamer bilden einen Lichtmustergenerator zum Erzeugen von Bildern mit hellen und dunklen Pixeln. Eine Folge von Bildern kann produziert werden um einen Film zu bilden, z.B. einen Film, der einen sich bewegenden Lichtbalken zeigt.

Die Prüfvorrichtung kann zusätzlich eingerichtet sein, eine eventuelle Kreuzkupplung zwischen dem zu testenden Lichtwellenleiter und einem anderen der Lichtwellenleiter der elektro-optischen Leiterplatte festzustellen.

Die Prüfvorrichtung kann weiter mindestens eine Adapterplatte mit federnd gelagerten Umlenkelementen umfassen, die beim Test automatisch in die Kavitäten eingeführt werden.

Mindestens eine der Adapterplatten kann Nadeln aufweisen, um einen oder mehrere elektrische Leiter der elektro-optischen Leiterplatte zu kontaktieren.

Die Erfindung wird nachfolgend anhand von Ausführungsbeispielen und anhand der Zeichnung näher erläutert. Um einzelne Aspekte deutlich sichtbar zu machen, sind die Figuren nicht massstäblich gezeichnet.

### Kurze Beschreibung der Figuren

Die beigefügten Zeichnungen, die in die Beschreibung aufgenommen sind und einen Teil dieser Beschreibung darstellen, veranschaulichen eine oder mehrere Ausführungsformen der vorliegenden Erfindung und dienen zusammen mit der detaillierten Beschreibung dazu, die Prinzipien und die Ausführungsformen der Erfindung zu erklären. Die Figuren sind nicht massstabsgetreu gezeichnet.
- Fig. 1: zeigt schematisch eine erfindungsgemässe Prüfvorrichtung für elektro-optische Leiterplatten,
- Fig. 2A-C: zeigen Momentaufnahmen während der Bewegung eines ersten Lichtbalkens über ein Umlenkelement,
- Fig. 3A-C: zeigen Momentaufnahmen während der Bewegung eines zweiten Lichtbalkens über das Umlenkelement,
- Fig. 4A, B: illustrieren die Prüfung eines einzelnen Lichtwellenleiters, und
- Fig. 5: zeigt eine weitere Prüfvorrichtung.

### Detaillierte Beschreibung der Erfindung

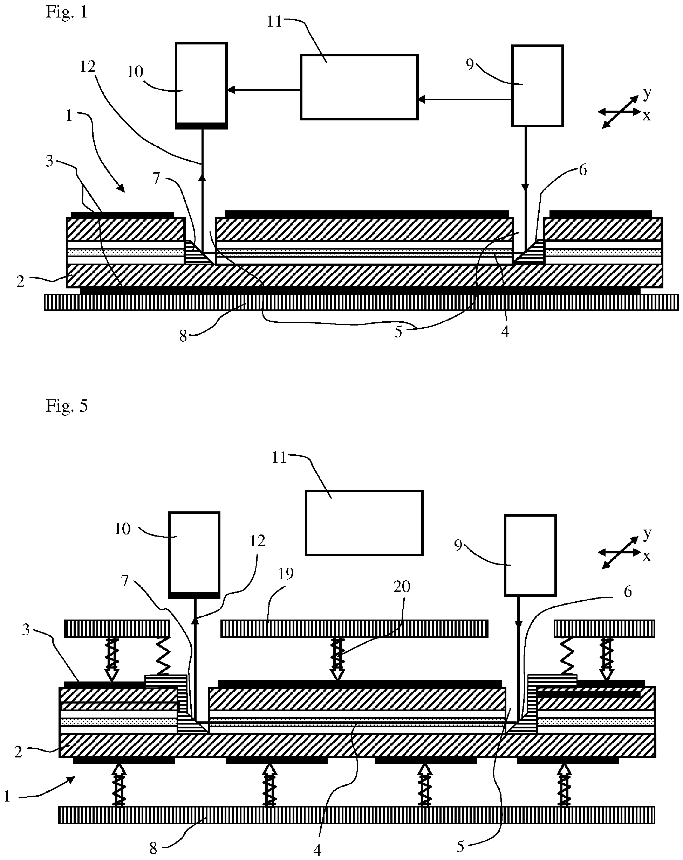

Die Fig. 1 zeigt schematisch eine erfindungsgemässe Prüfvorrichtung für elektro-optische Leiterplatten, wobei die Leiterplatte aus Gründen der zeichnerischen Klarheit nicht massstäblich, sondern vergrössert dargestellt ist. Die Leiterplatte 1 besteht im Wesentlichen aus einem Substrat 2, auf das elektrische Leiter 3 und Lichtwellenleiter 4 aufgebracht sind. Die Leiterplatte 1 kann eine oder mehrere komplexe optische und elektrische Lagen mit sehr vielen Lichtwellenleitern 4 besitzen. Die Lichtwellenleiter 4 münden in Kavitäten 5, in die ein Umlenkelement fest eingesetzt ist oder für Testzwecke temporär eingesetzt werden kann. Sie können aber auch bis an den Rand geführt sein. Das Umlenkelement besitzt mindestens einen Umlenkspiegel, dessen Spiegelfläche entsprechend den jeweiligen optischen Anforderungen beliebig geformt sein kann. Jedem Lichtwellenleiter 4 sind somit zwei Umlenkspiegel zugeordnet, nämlich ein Umlenkspiegel eines ersten Umlenkelementes 6 und ein Umlenkspiegel eines zweiten Umlenkelementes 7, die dazu dienen, senkrecht auf die Oberfläche der Leiterplatte 1 einfallendes Licht in den Lichtwellenleiter 4 einzukoppeln und wieder in die senkrecht zur Oberfläche der Leiterplatte 1 verlaufende Richtung auszukoppeln.

Die Prüfvorrichtung umfasst eine Halterung 8 für die Aufnahme der Leiterplatte 1, einen Beamer 9, eine Kamera 10 und eine Steuereinrichtung 11. Die Kamera 10 und der Beamer 9 können ortsfest angeordnet sein, sind aber bevorzugt manuell oder von entsprechenden Motoren gesteuert in zwei parallel zur Halterung 8 bzw. zur Oberfläche der Leiterplatte 1 verlaufenden Richtungen verschiebbar, so dass der Beamer 9 und die Kamera 10 so positionierbar sind, dass vom Beamer 9 abgegebenes Licht (bzw. Lichtstrahl) mittels der Umlenkspiegel der beiden Umlenkelemente 6 und 7 in die Lichtwellenleiter 4 der Leiterplatte 1 einkoppelbar und in das Blickfeld der Kamera 10 auskoppelbar ist. Ein solcher Strahlengang 12 ist in der Fig. 1 eingezeichnet. Der Beamer 9 ist ein Digitalprojektor, der aus Pixeln zusammengesetzte Bilder erzeugt, wobei jeder Pixel ein heller Lichtpunkt oder schwarz ist. Die Wellenlänge des vom Beamer 9 projizierten Lichts umfasst den Bereich, in dem die Lichtwellenleiter 4 arbeiten. D.h. der Beamer 9 erzeugt je nach Bedarf Licht im sichtbaren und/oder infraroten und/oder ultravioletten Spektralbereich. Die Steuereinrichtung 11 steuert den Beamer 9 und die Kamera 10 und wertet die Messergebnisse aus. Die Steuereinrichtung 11 ist eingerichtet, mit dem Beamer 9 Bilder mit wenigstens einem ersten Lichtbalken und/oder mit wenigstens einem zweiten Lichtbalken und/oder mit wenigstens einem Lichtfleck zu erzeugen. Wenigstens ein Teil der Steuereinrichtung 11 und der Beamer 9 bilden somit einen Lichtmustergenerator. Jeder der ersten Lichtbalken ist charakterisiert durch eine erste Koordinate, die seine Position innerhalb des Bildes entlang einer ersten Richtung charakterisiert, und eine Ausrichtung, die orthogonal zur ersten Richtung verläuft. Jeder der zweiten Lichtbalken ist charakterisiert durch eine zweite Koordinate, die seine Position innerhalb des Bildes entlang einer zweiten Richtung charakterisiert, und eine Ausrichtung, die orthogonal zur zweiten Richtung verläuft. Die erste und die zweite Richtung verlaufen bevorzugt orthogonal zueinander. Jeder Lichtbalken hat eine vorbestimmte Breite und Länge. Jeder Lichtfleck ist beispielsweise ein heller quadratischer Fleck oder ein heller runder Fleck einer vorbestimmten Grösse, wobei auch andere Geometrien möglich sind. Jedem Lichtfleck sind eine erste und eine zweite Koordinate zugeordnet, die seine Position im Bild charakterisieren.

Die Arbeitsweise der Prüfvorrichtung wird im folgenden anhand eines Ausführungsbeispiels einer Leiterplatte 1 beschrieben, die mehrere Lichtwellenleiter 4 hat, deren eines Ende in eine erste Kavität 5 und deren anderes Ende in eine zweite Kavität 5 mündet, wobei in die erste Kavität 5 ein erstes Umlenkelement 6 und in die zweite Kavität 5 ein zweites Umlenkelement 7 eingesetzt ist.

Zur Vorbereitung wird der Beamer 9 so positioniert, dass das von ihm projizierte Bild auf das erste Umlenkelement 6 fällt, und die Kamera 10 wird so positioniert, dass sich das zweite Umlenkelement 7 in ihrem Blickfeld befindet. Die Kamera 10 nimmt somit Bilder des zweiten Umlenkelementes 7 auf.

In einer ersten Phase wird der Beamer 9 benutzt, um für jeden Umlenkspiegel des ersten Umlenkelementes 6 die Lage zu bestimmen, die ein Lichtfleck in dem von dem Beamer 9 projizierten Bild einnehmen muss, damit der Lichtfleck den Umlenkspiegel beleuchtet. Die Grösse des Lichtflecks ist so bemessen, dass er bei richtiger Positionierung innerhalb des vom Beamer 9 erzeugten Bildes nur den ausgewählten Umlenkspiegel, nicht aber die benachbarten Umlenkspiegel beleuchtet. In einer zweiten Phase wird der Beamer 9 benutzt, um wenigstens einen Umlenkspiegel selektiv mit dem ihm zugeordneten Lichtfleck zu beleuchten und die Prüfung des dem wenigstens einen Umlenkspiegel zugeordneten Lichtwellenleiters durchzuführen. Die diesen Aufgaben entsprechende Steuerung des Beamers 9 durch die Steuereinrichtung 11 wird nachfolgend im Detail erläutert.

Die Steuereinrichtung 11 ist eingerichtet, in der ersten Phase
A) einen mit dem Beamer 9 projizierten ersten Lichtbalken 13 schrittweise entlang einer ersten Richtung über das erste Umlenkelement 6 zu bewegen und mit der Kamera 10 bei jedem Schritt ein Bild aufzunehmen, wobei sich der esrte Lichtbalken 13 orthogonal zur ersten Richtung erstreckt;
   Der Beamer 9 erzeugt also, gesteuert von der Steuereinrichtung 11, ein Bild nach dem andern, wobei der erste Lichtbalken 13 in jedem Bild eine andere Position hat. Diese Position verschiebt sich entlang der ersten Richtung. Jedem von der Kamera gelieferten Bild ist ein Bild des Beamers 9 und damit eine erste Koordinate zugeordnet, die die Position des Lichtbalkens 13 entlang der ersten Richtung charakterisiert. Sobald der Lichtbalken 13 einen oder mehrere Umlenkspiegel 14 des ersten Umlenkelementes 6 trifft, wird das Licht via den bzw. die dazugehörigen Lichtwellenleiter 4 auf den bzw. die zugeordneten Umlenkspiegel 14 des zweiten Umlenkelementes 7 übertragen, so dass dieser bzw. diese Umlenkspiegel 14 aufleuchtet/aufleuchten.
B) von den von der Kamera 10 gelieferten Bildern als ersten Satz von Bildern diejenigen Bilder auszusuchen, bei denen wenigstens ein Umlenkspiegel 14 des zweiten Umlenkelementes 7 aufleuchtet;

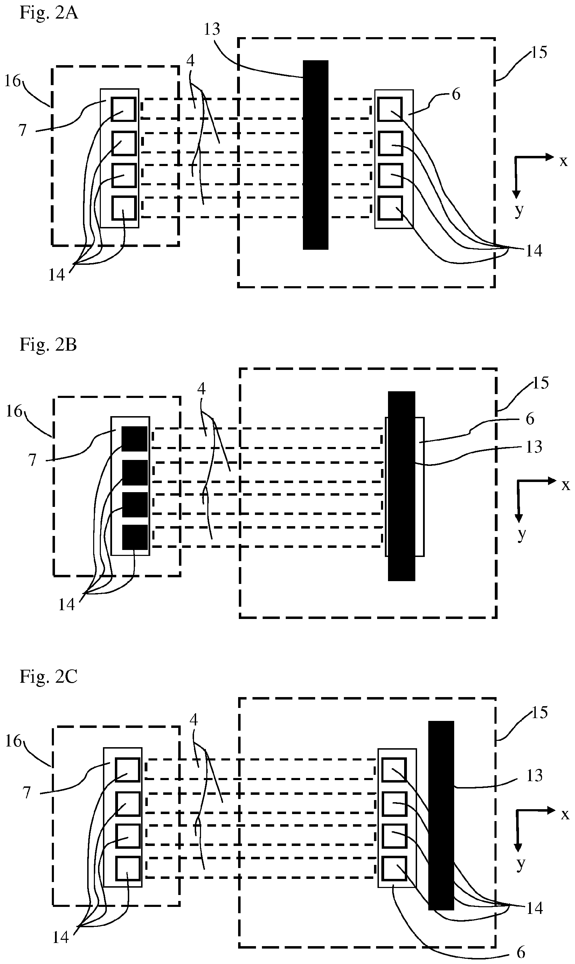

   Die Fig. 2A bis 2C illustrieren die Schritte A und B. Diese Figuren zeigen schematisch eine Leiterplatte 1 mit vier Lichtwellenleitern 4 und den beiden Umlenkelementen 6, 7 mit je vier Umlenkspiegeln 14, sowie den ersten Lichtbalken 13. Die Enden der Lichtwellenleiter 4 und die Umlenkspiegel 14 sind in einem vorgegebenen Abstand zueinander angeordnet. Die von dem Bild des Beamers 9 auf der Leiterplatte 1 eingenommene Fläche ist mit einer gestrichelten Umrandung 15 und das Blickfeld der Kamera 10 ist mit einer gestrichelten Umrandung 16 gekennzeichnet. Die erste Richtung ist hier als x-Richtung, die zweite Richtung als y-Richtung bezeichnet. Die Fig. 2A zeigt eine Momentaufnahme, bei der sich der erste Lichtbalken 13 auf der einen, hier der linken Seite der Umlenkspiegel 14 des ersten Umlenkelementes 6 befindet und dessen Umlenkspiegel 14 nicht beleuchtet. Die Umlenkspiegel 14 des zweiten Umlenkelementes 7 leuchten daher nicht, d.h. sie sind dunkel. Die Fig. 2B zeigt eine Momentaufnahme, bei der der erste Lichtbalken 13 auf alle Umlenkspiegel 14 des ersten Umlenkelementes 6 fällt und diese Umlenkspiegel beleuchtet. Die Umlenkspiegel 14 des zweiten Umlenkelementes 7 leuchten daher, d.h. sie sind hell. Die Fig. 2C zeigt eine Momentaufnahme, bei der sich der erste Lichtbalken 13 auf der anderen, hier der rechten Seite der Umlenkspiegel 14 des ersten Umlenkelementes 6 befindet und dessen Umlenkspiegel 14 nicht beleuchtet. Die Umlenkspiegel 14 des zweiten Umlenkelementes 7 leuchten daher nicht. Bei diesem Beispiel enthält der erste Satz von Bildern nur ein einziges Bild, weil der erste Lichtbalken 13 entweder alle oder keinen Umlenkspiegel 14 des ersten Umlenkelementes 6 beleuchtet.
C) einen mit dem Beamer 9 projizierten zweiten Lichtbalken 17 schrittweise entlang einer zweiten Richtung über das erste Umlenkelement 6 zu bewegen und mit der Kamera 10 bei jedem Schritt ein Bild aufzunehmen, wobei sich der zweite Lichtbalken 17 orthogonal zur zweiten Richtung erstreckt;
   Die Breite und Länge des zweiten Lichtbalkens 17 sind bevorzugt gleich der Breite und Länge des ersten Lichtbalkens 13. Jedem Bild des Beamers 9 ist eine andere Position des zweiten Lichtbalkens 17 entlang der zweiten Richtung und somit eine andere zweite Koordinate des zweiten Lichtbalkens 17 zugeordnet.
D) von den von der Kamera 10 gelieferten Bildern als zweiten Satz von Bildern diejenigen Bilder auszusuchen, bei denen wenigstens ein Umlenkspiegel 14 des zweiten Umlenkelementes 7 aufleuchtet;

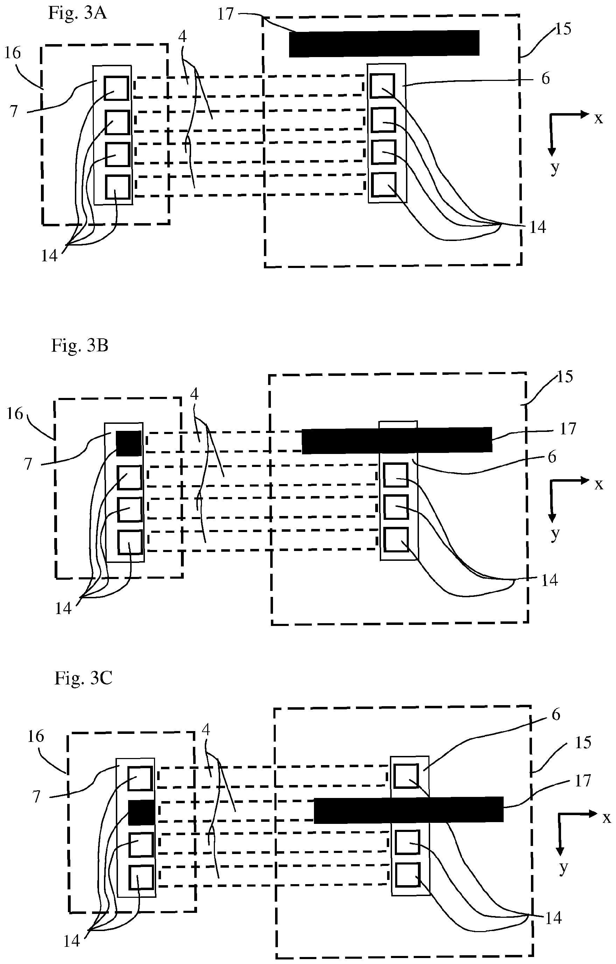

   Die Fig. 3A bis 3C illustrieren die Schritte C und D. Die Fig. 3A zeigt eine Momentaufnahme, bei der sich der zweite Lichtbalken 17 auf der oberen Seite der Umlenkspiegel 14 des ersten Umlenkelementes 6 befindet und dessen Umlenkspiegel 14 nicht beleuchtet. Die Umlenkspiegel 14 des zweiten Umlenkelementes 7 leuchten daher nicht. Die Fig. 3B zeigt eine Momentaufnahme, bei der sich der zweite Lichtbalken 17 über dem ersten Umlenkspiegel des ersten Umlenkelementes 6 befindet und diesen Umlenkspiegel beleuchtet. Der erste Umlenkspiegel des zweiten Umlenkelementes 7 leuchtet daher. Die anderen Umlenkspiegel sind dunkel. Die Fig. 3C zeigt eine Momentaufnahme, bei der sich der zweite Lichtbalken 17 über dem zweiten Umlenkspiegel des ersten Umlenkelementes 6 befindet und diesen Umlenkspiegel beleuchtet. Der zweite Umlenkspiegel des zweiten Umlenkelementes 7 leuchtet daher. Die anderen Umlenkspiegel sind dunkel. Bei dem hier gezeigten Beispiel enthält der Satz von zweiten Bildern vier Bilder, da der Lichtbalken jeweils nur einen Umlenkspiegel 14 des ersten Umlenkelementes 6 beleuchtet.
E) aus dem ersten Satz und dem zweiten Satz von Bildern für jeden zu testenden Lichtwellenleiter 4 diejenige Position zu ermitteln, die ein Lichtfleck in dem von dem Beamer 9 erzeugten Bild einnehmen muss, damit der Lichtfleck ausschliesslich den Umlenkspiegel 14 des ersten Umlenkelementes 6 beleuchtet, der dem zu testenden Lichtwellenleiter 4 zugeordnet ist.

Im folgenden werden zwei Möglichkeiten für den Schritt E näher erläutert.

Die erste Möglichkeit besteht darin, die Bilder des ersten Satzes von Bildern und die Bilder des zweiten Satzes von Bildern zu überlagern und die Kreuzungsgebiete oder Kreuzungspunkte zu bestimmen, wo sich die Lichtbalken der Bilder des ersten Satzes und die Lichtbalken der Bilder des zweiten Satzes kreuzen. Da die Lichtbalken der Bilder des ersten Satzes orthogonal zur ersten Richtung und die Lichtbalken des zweiten Satzes orthogonal zur zweiten Richtung verlaufen, gibt es solche Kreuzungsgebiete bzw. Kreuzungspunkte. Für jedes Kreuzungsgebiet bzw. jeden Kreuzungspunkt wird für den Beamer 9 ein Bild erzeugt, das am Ort des Kreuzungspunkts bzw. Kreuzungsgebiets einen Lichtfleck enthält, dessen Grösse so bemessen ist, dass er einen einzelnen Umlenkspiegel 14 beleuchtet, nicht aber benachbarte Umlenkspiegel 14.

Die zweite Möglichkeit besteht darin, diejenigen ersten Koordinaten des ersten Lichtbalkens 13 zu bestimmen, die den Bildern des ersten Satzes von Bildern zugeordnet sind, und diejenigen zweiten Koordinaten des zweiten Lichtbalkens 17 zu bestimmen, die den Bildern des zweiten Satzes von Bildern zugeordnet sind.

Bei dem hier gezeigten Beispiel enthält der Satz von ersten Bildern nur ein einziges Bild. Es gibt daher nur eine einzige erste Koordinate zu bestimmen. Alle Umlenkspiegel 14 des ersten Umlenkelementes 6 haben nämlich die gleiche x-Koordinate. Diese erste Koordinate ist die x-Koordinate, die der erste Lichtbalken 13 in dem in der Fig. 2B gezeigten Zustand einnimmt. Diese erste Koordinate wird bezeichnet mit x₁.

Die zweiten Koordinaten sind die y-Koordinaten, die der zweite Lichtbalken 17 in dem in den Fig. 3B und 3C gezeigten und bei diesem Beispiel zwei weiteren Zuständen einnimmt. Bei diesem Beispiel mit vier Lichtwellenleitern 4 gibt es vier zweite Koordinaten. Diese vier zweiten Koordinaten sind bezeichnet mit y₁, y₂, y₃ und y₄.

Anhand der ermittelten ersten Koordinaten und der ermittelten zweiten Koordinaten werden nun Koordinatenpaare aus den ersten und zweiten Koordinaten gebildet. Die Koordinatenpaare charakterisieren die Positionen, die Lichtflecken in dem von dem Beamer 9 erzeugten Bild einnehmen müssen, damit jeder Lichtfleck einen Umlenkspiegel 14 des ersten Umlenkelementes 6 beleuchtet und sein Licht somit in den dem Umlenkspiegel 14 zugeordneten Lichtwellenleiter 4 eingekoppelt wird. Bei diesem Beispiel gibt es vier Koordinatenpaare, nämlich (x₁, y₁), (x₁, y₂), (x₁, y₃) und (x₁, y₄).

Die Steuereinrichtung 11 ist weiter eingerichtet, in der zweiten Phase
F) anhand der in der ersten Phase ermittelten Positionsinformationen für jeden zu testenden Lichtwellenleiter 4 mit dem Beamer einen Lichtfleck 18 auf den dem zu testenden Lichtwellenleiter 4 zugeordneten Umlenkspiegel 14 des ersten Umlenkelementes 6 zu projizieren, wobei der Lichtfleck 18 keinen Umlenkspiegel beleuchtet, der einem dem zu testenden Lichtwellenleiter 4 benachbarten Lichtwellenleiter zugeordnet ist, mit der Kamera 10 ein Bild aufzunehmen und anhand des Bildes die Qualität des Lichtwellenleiters 4 zu bestimmen.

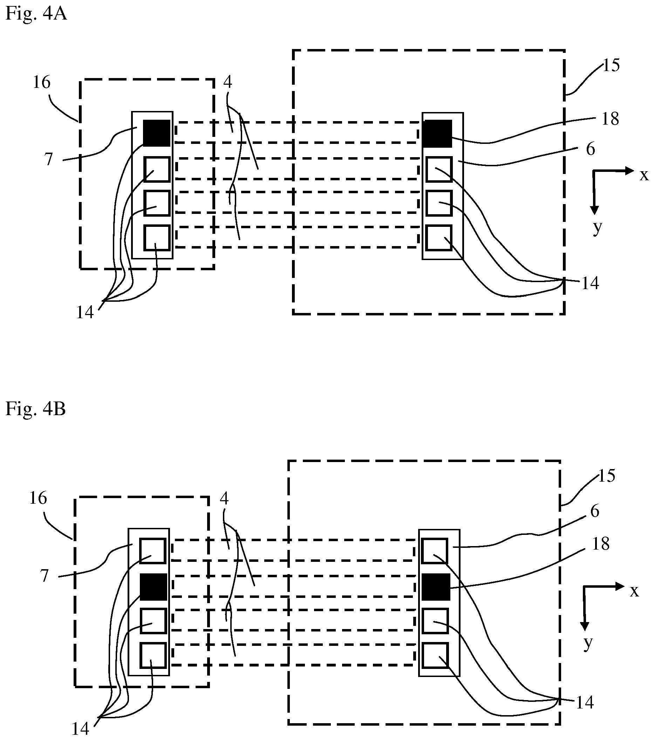

Die Fig. 4A und 4B illustrieren diese Phase. Die Fig. 4A zeigt den Zustand, bei dem ein Lichtfleck 18 den ersten Umlenkspiegel beleuchtet. Die Qualität des zugeordneten, also des ersten Lichtwellenleiters 4 wird anhand des von der Kamera 10 in diesem Zustand aufgenommenen Bildes ermittelt. Die Fig. 4B zeigt den Zustand, bei dem ein Lichtfleck 18 den zweiten Umlenkspiegel beleuchtet. Die Qualität des zugeordneten, also des zweiten Lichtwellenleiters 4 wird anhand des von der Kamera 10 in diesem Zustand aufgenommenen Bildes ermittelt. Usw.

Da jeder Umlenkspiegel des ersten Umlenkelementes 6 einzeln beleuchtet werden kann, kann eine allfällige Kreuzkopplung zwischen den Lichtwellenleitern 4 erfasst werden. Im Fall einer Kreuzkopplung leuchtet nämlich nicht nur der dem getesteten Lichtwellenleiter 4 zugeordnete Umlenkspiegel des zweiten Umlenkelementes 7 auf, sondern auch noch ein benachbarter Umlenkspiegel.

Die Testgeschwindigkeit kann erhöht werden, wenn mehrere Umlenkspiegel, die zu Lichtwellenleitern 4 gehören, zwischen denen eine Kreuzkopplung aus geometrischen Gründen ausgeschlossen werden kann, gleichzeitig beleuchtet werden.

Die Erfindung wurde anhand eines einfachen Ausführungsbeispiels beschrieben. Eine komplexe elektro-optische Leiterplatte kann eine Vielzahl von Lichtwellenleitern 4 enthalten, deren Enden sich an unterschiedlichen Orten befinden, so dass auch eine Vielzahl von Kavitäten 5 und Umlenkelementen vorhanden sind. Die Prüfvorrichtung kann so eingerichtet sein, dass sie die oben genannten Schritte sowohl in der ersten Phase als auch in der zweiten Phase für mehrere Lichtwellenleiter 4 parallel durchführen kann, insoweit die optische Prüfung nicht beeinträchtigt wird, beispielsweise durch Kreuzkopplungen.

Die erfindungsgemässe Prüfvorrichtung eignet sich,
- um die Qualität der Lichtwellenleiter 4 zu überprüfen,
- um komplexe optische Systeme wie Splitter und Kombinierer, die auch bekannt sind als Combiner oder N x 1 Coupler, zu überprüfen,
- eventuelle Kreuzkopplungen zu detektieren,
- um zusätzlich die korrekte Position der Umlenkspiegel relativ zu anderen Merkmalen auf der elektro-optischen Leiterplatte zu überprüfen.
und das ganze in sehr hoher Geschwindigkeit.

Ein Splitter besteht aus einem Lichtwellenleitersystem mit einem Eingang und zwei oder mehr Ausgängen. Er kann so ausgestaltet sein, dass sich die Lichtenergie zu gleichen Teilen auf die Ausgänge verteilt. Es ist aber auch eine andere Aufteilung möglich. Ein Kombinierer besteht aus einem Lichtwellenleitersystem mit zwei oder mehr Eingängen und einem Ausgang. Bei einem Splitter wird eingangsseitig ein Umlenkspiegel des ersten Umlenkelementes 6 beleuchtet und überprüft, ob die Helligkeit der leuchtenden, ausgangsseitigen Umlenkspiegel der Vorgabe entspricht. Bei einem Kombinierer wird eingangsseitig ein Umlenkspiegel nach dem anderen beleuchtet und überprüft, ob die Unterschiede in der Helligkeit des ausgangsseitigen Umlenkspiegels einen vorbestimmten Wert nicht überschreiten.

Die Kalibration der Prüfvorrichtung kann beispielsweise mittels einer elektro-optischen Referenzleiterplatte vorgenommen werden, deren Eigenschaften vorgängig auf herkömmliche Art ermittelt wurden.

Die Fig. 5 zeigt eine Ausführung der Prüfvorrichtung, die geeignet ist, um Lichtwellenleiter 4 mit horizontaler Einkopplung zu testen. Die Prüfvorrichtung enthält mindestens eine Adapterplatte 19 mit federnd gelagerten Umlenkelementen 6, 7, die beim Test automatisch in die Kavitäten 5 eingeführt werden. Die Adapterplatte 19 kann, wie ebenfalls gezeigt ist, zudem noch Nadeln 20 aufweisen, die die elektrischen Leiter 3 kontaktieren, so dass sowohl die elektrischen als auch die optischen Eigenschaften der elektro-optischen Leiterplatte 1 geprüft werden können. Bei dieser Prüfvorrichtung ist eine der Adapterplatten 19 in die Haltung 8 integriert.

Die erfindungsgemässe Prüfvorrichtung bietet den Vorteil, dass die präzise Ausrichtung der Lichtquelle, die die Lichtflecken zur Beleuchtung der Umlenkspiegel erzeugt, nicht auf mechanische Weise, sondern softwaremässig mittels eines Beamers erfolgt. Der Einsatz eines Beamers ermöglicht eine präzise Messung der Eigenschaften der Lichtwellenleiter ohne dass der Beamer präzise ausgerichtet werden muss. Die Prüfzeit wird dadurch stark verringert.

Während Ausführungsformen dieser Erfindung gezeigt und beschrieben wurden, ist es für den Fachmann ersichtlich, dass mehr Modifikationen als oben erwähnt möglich sind, ohne von dem erfinderischen Konzept abzuweichen. Die Erfindung ist daher nur durch die Ansprüche und deren Äquivalente beschränkt.

## Patentansprüche

1. Prüfvorrichtung für elektro-optische Leiterplatten (1) mit Lichtwellenleitern (4), umfassend
eine Halterung (8) für die Aufnahme einer elektro-optischen Leiterplatte (1),
einen Beamer (9),
eine Kamera (10), und
eine Steuereinrichtung (11), wobei
der Beamer (9) und die Kamera (10) so positionierbar sind, dass vom Beamer (9) abgegebenes Licht mittels mindestens eines Umlenkelementes (6) in einen oder mehrere Lichtwellenleiter (4) der elektro-optischen Leiterplatte (1) einkoppelbar und mittels mindestens eines weiteren Umlenkelementes (7) in das Blickfeld der Kamera (10) auskoppelbar ist, wobei jedes der Umlenkelemente (6, 7) mehrere Umlenkspiegel enthält und wobei jedem Lichtwellenleiter (4) der Leiterplatte (1) ein Umlenkspiegel eines ersten Umlenkelementes (6) und ein Umlenkspiegel eines zweiten Umlenkelementes (7) zugeordnet ist, und wobei die Steuereinrichtung (11) eingerichtet ist, in einer ersten Phase
- einen ersten mit dem Beamer (9) projizierten Lichtbalken schrittweise entlang einer ersten Richtung über das erste Umlenkelement (6) zu bewegen und mit der Kamera (10) bei jedem Schritt ein Bild aufzunehmen, wobei sich der erste Lichtbalken orthogonal zur ersten Richtung erstreckt;
- von den von der Kamera gelieferten Bildern als ersten Satz von Bildern diejenigen Bilder auszusuchen, bei denen wenigstens ein Umlenkspiegel des zweiten Umlenkelementes (7) aufleuchtet;
- einen zweiten mit dem Beamer (9) projizierten Lichtbalken schrittweise entlang einer zweiten Richtung über das erste Umlenkelement (6) zu bewegen und mit der Kamera (10) bei jedem Schritt ein Bild aufzunehmen, wobei sich der zweite Lichtbalken orthogonal zur zweiten Richtung erstreckt;
- von den von der Kamera (10) gelieferten Bildern als zweiten Satz von Bildern diejenigen Bilder auszusuchen, bei denen wenigstens ein Umlenkspiegel des zweiten Umlenkelementes (7) aufleuchtet; und
- aus dem ersten Satz und dem zweiten Satz von Bildern für jeden zu testenden Lichtwellenleiter (4) diejenige Position zu ermitteln, die ein Lichtfleck in dem von dem Beamer (9) erzeugten Bild einnehmen muss, damit der Lichtfleck ausschliesslich den Umlenkspiegel des ersten Umlenkelementes (6) beleuchtet, der dem zu testenden Lichtwellenleiter (4) zugeordnet ist;
und wobei die Steuereinrichtung (11) eingerichtet ist, in einer zweiten Phase für jeden zu testenden Lichtwellenleiter (4)
mit dem Beamer (9) anhand der in der ersten Phase ermittelten Position einen Lichtfleck auf den dem zu testenden Lichtwellenleiter (4) zugeordneten Umlenkspiegel zu projizieren, wobei der Lichtfleck keinen Umlenkspiegel beleuchtet, der einem dem zu testenden Lichtwellenleiter (4) benachbarten Lichtwellenleiter (4) zugeordnet ist,
mit der Kamera (10) ein Bild aufzunehmen, und
anhand des Bildes eine Qualität des Lichtwellenleiters (4) zu bestimmen.

2. Prüfvorrichtung nach Anspruch 1, die zusätzlich eingerichtet ist, eine eventuelle Kreuzkupplung zwischen dem zu testenden Lichtwellenleiter (4) und einem anderen der Lichtwellenleiter (4) festzustellen.

3. Prüfvorrichtung nach Anspruch 1 oder 2, weiter umfassend mindestens eine Adapterplatte (19) mit federnd gelagerten Umlenkelementen (6, 7), die beim Test automatisch in Kavitäten (5) der elektro-optischen Leiterplatte (1) eingeführt werden.

4. Prüfvorrichtung nach Anspruch 3, wobei mindestens eine der Adapterplatten (19) Nadeln (20) aufweist, um einen oder mehrere elektrische Leiter (3) der elektro-optischen Leiterplatte (1) zu kontaktieren.

## Claims

1. Test apparatus for electro-optical printed circuit boards (1) having optical waveguides (4), the test apparatus comprising
a retainer (8) for accommodating an electro-optical printed circuit board (1),
a beamer (9),
a camera (10), and
a control device (11), wherein the beamer (9) and the camera (10) are configured to be positioned in such a way that light emitted by the beamer (9) may be fed by means of at least one deflecting element (6) into one or more of the optical waveguides (4) of the electro-optical printed circuit board (1) and may be coupled out into the field of vision of the camera (10) by means of at least one further deflecting element (7), wherein each of the deflecting elements (6, 7) contains several deflecting mirrors and wherein each optical waveguide (4) of the electro-optical printed circuit board (1) is associated with a deflecting mirror of a first deflecting element (6) and a deflecting mirror of a second deflecting element (7), and wherein the control device (11) is set up in a first phase
- to move a first light bar projected by the beamer (9) step-by-step along a first direction over the first deflecting element (6) and to take in each step an image with the camera (10), wherein the first light bar extends orthogonally to the first direction;
- to pick as a first set of images those images from the images supplied by the camera (10) in which at least one deflecting mirror of the second deflecting element (7) lights up;
- to move a second light bar projected by the beamer (9) step-by-step along a second direction over the first deflecting element (6) and to take in each step an image with the camera (10), wherein the second light bar extends orthogonally to the second direction;
- to pick as a second set of images those images from the images supplied by the camera (10) in which at least one deflecting mirror of the second deflecting element (7) lights up, and
- to determine from the first set and the second set of images for each of the optical waveguides (4) to be tested the position which a light spot needs to assume in the image generated by the beamer (9) so that the light spot exclusively illuminates the deflecting mirror of the first deflecting element (6) which is associated with the optical waveguide (4) to be tested;
and wherein in a second phase the control device (11) is set up for each of the optical waveguides (4) to be tested
to project with the beamer (9) based on the position determined in the first phase a light spot onto the deflecting mirror associated with the optical waveguide (4) to be tested, wherein the light spot does not illuminate any deflecting mirror which is associated with an optical waveguide (4) adjacent to the optical waveguide (4) to be tested,
to record an image by means of the camera (10), and
to determine a quality of the optical waveguide (4) on the basis of the image.

2. Test apparatus according to claim 1, further configured to detect potential cross coupling between the optical waveguide (4) to be tested and another of the optical waveguides (4).

3. Test apparatus according to claim 1 or 2, further comprising at least one adapter plate (19) with resiliently mounted deflecting elements (6, 7) which are automatically introduced into cavities (5) during the test.

4. Test apparatus according to claim 3, wherein at least one of the adapter plates (19) comprises needles (20) in order to make contact with one or more electrical conductors (3) of the electro-optical printed circuit board (1).

## Revendications

1. Dispositif de contrôle pour des cartes de circuits électro-optiques (1) avec des guides d'ondes lumineuses (4), comprenant
une monture (8) destinée à recevoir une carte de circuits électro-optique (1),
un projecteur (9),
une caméra (10) et
une installation de commande (11),
le projecteur (9) et la caméra (10) pouvant être positionnés de telle façon que la lumière émise par le projecteur (9) puisse être transmise au moyen d'au moins un élément de déviation (6) dans un ou plusieurs guides d'ondes lumineuses (4) de la carte de circuits électro-optique (1) et en ressortir au moyen d'au moins un autre élément de déviation (7) dans le champ de la caméra (10), chacun des éléments de déviation (6, 7) contenant plusieurs miroir de déviation et chaque guide d'ondes lumineuses (4) de la carte de circuits (1) étant associé à un miroir de déviation d'un premier élément de déviation (6) et à un miroir de déviation d'un deuxième élément de déviation (7), et l'installation de commande (11) étant arrangée pour, dans une première phase,
- déplacer un trait de lumière projeté par le projecteur (9) pas à pas le long d'une première direction sur le premier élément de déviation (6) et acquérir une image à chaque pas avec la caméra (10), le premier trait de lumière s'étendant perpendiculairement à la première direction;
- rechercher dans les images fournies par la caméra, constituant un premier ensemble d'images, les images dans lesquelles au moins un miroir de déviation du deuxième élément de déviation (7) s'éclaire;
- déplacer un deuxième trait de lumière projeté par le projecteur (9) pas à pas le long d'une deuxième direction sur le premier élément de déviation (6) et acquérir une image à chaque pas avec la caméra (10), le deuxième trait de lumière s'étendant perpendiculairement à la deuxième direction;
- rechercher dans les images fournies par la caméra (10), constituant un deuxième ensemble d'images, les images dans lesquelles au moins un miroir de déviation du deuxième élément de déviation (7) s'éclaire; et
- déterminer à partir du premier ensemble d'images et du deuxième, pour chacun des guides d'ondes lumineuses (4) à tester, la position qu'une tache de lumière doit prendre dans l'image produite par le projecteur (9) pour éclairer exclusivement le miroir de déviation du premier élément de déviation (6) associé au guide d'ondes lumineuses (4) à tester;
et dans lequel l'installation de commande (11) est agencée pour, dans une deuxième phase, pour chacun des guides d'ondes lumineuses (4) à tester,
projeter avec le projecteur (9) une tache lumineuse déterminée vers le miroir de déviation associé au guide d'ondes lumineuses (4) à tester, à l'aide de la position dans la première phase, la tache lumineuse n'éclairant aucun miroir de déviation associé à l'un des guides d'ondes lumineuses (4) voisins du guide d'ondes lumineuses (4) à tester;
acquérir une image avec la caméra (10) et
déterminer à l'aide de l'image la qualité du guides d'ondes lumineuses (4).

2. Dispositif de contrôle selon la revendication 1, qui est agencée pour détecter un éventuel couplage transversal entre le guide d'ondes lumineuses (4) à tester et un autre des guides d'ondes lumineuses (4).

3. Dispositif de contrôle selon la revendication 1 ou 2, comprenant en outre au moins une plaque d'adaptation (19) avec des éléments de déviation (6, 7) supportés de façon élastique, qui sont automatiquement introduits dans des cavités (5) de la carte de circuits électro-optique (1) pendant le test.

4. Dispositif de contrôle selon la revendication 3, dans lequel au moins une des plaques d'adaptation (19) présente des aiguilles (20) afin d'établir un contact avec un ou plusieurs conducteurs électriques (3) de la carte de circuits électro-optique (1).
